# EUROPEAN PATENT APPLICATION

(11) **EP 3 299 073 A1**
(43) Date of publication of application: **28.03.2018**
(21) Application number: 17380017.8
(22) Date of filing: 10.08.2017
(51) Int. Cl.: B01D 1/00, B01D 3/10, C02F 1/00, C02F 1/14, C02F 1/18

(54) **THERMAL DESALTER DEVICE**

(30) Priority: 09.09.2016 ES 201600748
(71) Applicant: Toledo Garcia, Miguel Angel, 28905 Getafe (Madrid) (ES)
(72) Inventor: Toledo Garcia, Miguel Angel, 28905 Getafe (Madrid) (ES)

(57) **Abstract**

Thermal desalter device and desalination process. The heat desalter apparatus desalters by evaporation and condensation the brackish water contained in a tank of limited volume and controlled pressure, by heating the tank with a heat source of heat. The water vapor obtained by heating is cooled inside the same tank and collected as desalted liquid water in another smaller volume tank installed inside the thermal desalter apparatus.

## Description

### OBJECT OF THE INVENTION

The object of the present invention is a thermal desalination device, which manages to desalinate water by means of evaporation and condensation system, specifying as energy source that one provided by a heat source, such as the sun, fossil fuels, vegetable combustion or electric resistance.

The source of energy on which this patent is developed is that one provided by solar radiation, although it requires human input for its manual operation, eliminating electric vacuum pumps and water pumps.

The aim of the invention is to provide potable water in a cheap and simple way, which can supply daily to small populations, which have brackish or salty water next to their populations, but which are not fit for human consumption.

### TECHNIQUE SECTOR

Desalting, or more concrete desalinization is the process to remove salt from seawater or brackish water, to make it drinkable or useful for other purposes. The technical method used is the one of distillation, which consists of evaporating water and condensing it later, to separate the pure water from the salts that it contains.

### STATE OF THE PREVIOUS TECHNIQUE

The invention is based on the physical fact that water evaporates and water vapor is condensed, according to its pressure and temperature. The evaporation temperature of the pure water to an atmosphere of pressure is one hundred degrees centigrade, increasing the evaporation temperature as the pressure increases, and the evaporation temperature decreases as the pressure decreases.

With these physical facts of the water, it is possible to condense water vapor by means of cooling air or reducing its pressure. A significant fact of this effect is the dew, which obtains the condensation of the water vapor of the air, when the contact between a plant with lower temperature by the cold of the night and the vapor of water contained in the air is accomplished.

Another antecedent of the invention is defined as the mist hunters, who by means of plastic nets at a lower temperature than the air due to the cold of the night, get water from the air due to the condensation of the mist that occurs at dawn in some coastal areas such as the Canary Islands, Chile or Scotland.

Although in the two examples there is no desalination, as a method to obtain potable water, the physical process to obtain it is very similar, being very different from the process of desalination of water, which consists of raising the water pressure to pass through a filter very dense, process called reverse osmosis.

From the sixteenth century, evaporative desalination devices already outlined centuries ago began to be incorporated into ships in order to provide them with a way to source themselves in an emergency. Before the advent of World War II, the use of evaporative desalination systems was fully extended by ships that sailed the seas on long transatlantic crossings.

Nevertheless, the first of the modern processes of desalination developed in large scale was the multistage flash desalination (MSF) in the middle of the 20th century in the USA (1955). Although, multi-effect distillation (MED) was known and had the potential to be more efficient than MSF, making the MED process efficient on a large scale took even longer. It was not until 1959 when the first MED facility was built in Aruba, all this information is explained in the Abengoa document, which can be found in the following internet address: http://www.laenergiadelcambio.com/breve-historia-de-la-desalacion

Multi-effect distillation (MED) is the desalination system most similar to the thermal desalter device, there are differences between them, such as: the thermal desalter device has controlled pressure, and above all the limitation of the volume of water to be desalinated.

The main difference between the two systems is that because the volume of water is lower compared to the surface of thermal contact, the energy to be supplied to reach the evaporation point of the water is lower.

The technical problem that solves the thermal desalter device, is the smaller contribution of energy to get desalinated water.

The existence of other devices similar to the thermal desalter device object of the present invention is not known.

### EXPLANATION OF THE INVENTION

The object of the present invention is a thermal desalting device, which achieves the evaporation and condensation of the brackish or salty water in a sealed vessel. In the mentioned vessel the pressure can be lowered so that the pressure of its interior is lower than the atmospheric pressure, causing the evaporation temperature of the water in its interior to decrease with respect to the evaporation temperature of the water on the outside of the thermal desalter device.

This thermal desalination device uses a parallel system of deposits and, by means of these deposits, the volume of the water to be desalinated is smaller and therefore requires a lower energy input, in order to reach the evaporation temperature of the water.

The thermal desalter device takes advantage of the inferred heat in its outer shell to heat brackish or salty water taking it to its evaporation point, and the water vapor obtained from the heating is cooled by a heat exchanger, converting water vapor into desalted water.

One of the characteristics of the thermal desalter device is that the only contact between brackish water and desalinated water occurs through the air, and by the support of the base of the deposits, avoiding the energy losses of the process and increasing the efficiency of the same.

### BRIEF EXPLANATION OF THE DRAWINGS

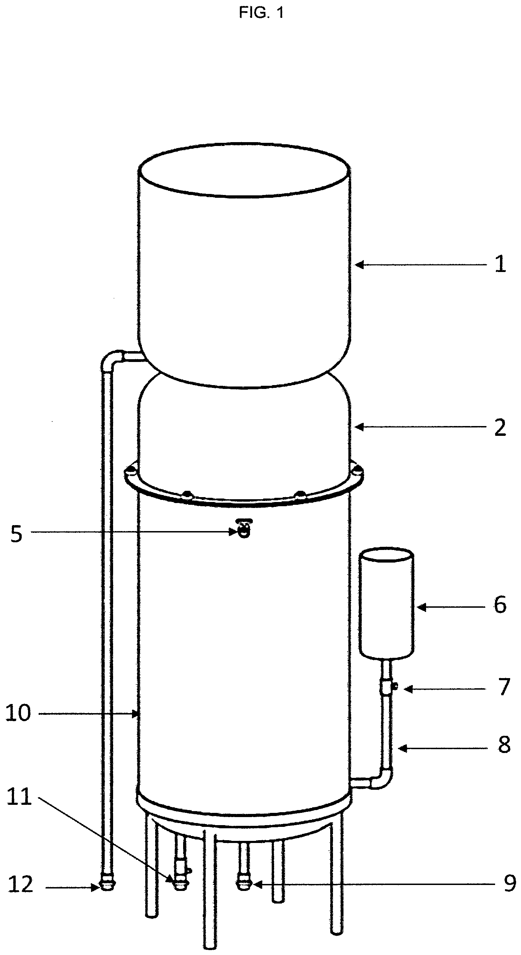

Figure 1. - Shows a view of the thermal desalter device.
Figure 2. - Shows a more detailed view of the elements forming the thermal desalter device.
Figure 3. - Shows a section view of the thermal desalter device with detail of tank supports.

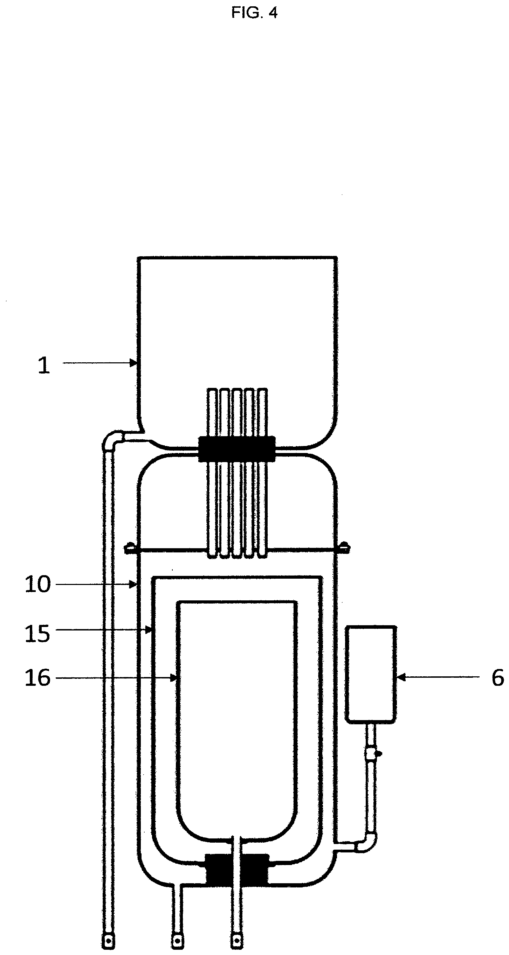

Figure 4. - Shows a section view of the thermal desalter device with detail of the tanks.

### DETAILED EXPLANATION OF A MODE FOR CARRYING OUT THE INVENTION

The parts forming the thermal desalter device in the drawings are designated and listed as follows:
(1) Cooling water tank.
(2) Thermal tank cap.
(3) Flange cover of the thermal tank.
(4) Flange of the thermal tank.
(5) Vacuum valve.
(6) Inlet water tank.
(7) Inlet water valve.
(8) Inlet water pipe.
(9) Desalted water valve.
(10) Thermal tank.
(11) Thermal tank outlet valve.
(12) Outlet valve of the cooling water tank.
(13) Cooling water heat exchanger.
(14) Heat exchanger of air of the thermal tank.
(15) Insulation tank.
(16) Desalted water tank.
(17) Desalted water tank support.
(18) Insulation tank support.
(19) Thermal tank support.
(20) Overpressure valve.

The thermal desalter device object of the present invention desalts water by means of evaporation and condensation of brackish water, and it is composed of a thermal tank (10). The last one has in its upper part a thermal tank cap (2). A flange of the thermal cap (4) and a flange cover of the thermal tank (3) unite the thermal tank (10) and the thermal tank cap (2).

The inside of the thermal tank (10) is connected to the outside by four pipes terminating in four valves, which are; a vacuum valve (5), an inlet water valve (7), a desalted water valve (9) and an outlet valve of the thermal tank (11). These four valves make the thermal tank (10) to be hermetic, as long as the thermal tank cap (2) is tightened up to the thermal tank (10) by the means of the flange cover of the thermal tank (3) and the flange of the thermal tank (4). Of course, all these together with the valves must be in closed position.

The thermal tank (10) has inside it an insulation tank (15), which enables the brackish water to desalt to occupy only the space between the thermal tank (10) and the insulation tank (15). The insulation tank (15) limits the amount of water, which the thermal tank (10) can accommodate. This insulation tank (15) prevents the salt water from flooding the remainder of the thermal desalter device by having a height greater than the maximum level of water that the inlet water tank (6) can reach, provided that this thermal desalter device is placed In the vertical position, which is the way in which the thermal desalter device works. Inside the insulation tank (15) is a desalinated water tank (16), which is the desalted water receiver.

The insulation tank (15) is attached to the thermal tank (10) by the insulation tank support (18). This support prevents the passage of water between both tanks.

The desalted water tank (16) is attached to the thermal tank (10) by the means of the desalted water tank support (17). This support prevents the passage of water between both tanks.

The vacuum valve (5) is located at a point where the level does not reach the brackish water nor desalinated water, when the thermal desalter device is in an upright or working position.

The inlet water valve (7) is connected to the inlet water tank (6) and the inlet water pipe (8).

The inlet water tank (6) is the element of the thermal desalter device, which serves to fill the thermal tank (10) with the water to be desalted.

The inlet water pipe (8) is made of a transparent material, to act as the level of quantity of water remaining to be desalted.

The cooling water heat exchanger (13) can be cooled by water or by air, according to the possibility of obtaining water from the place of installation of the thermal desalter device.

The cooling water heat exchanger (13) is located inside the cooling water tank (1). This cooling water tank (1) is open at its top for filling. At the bottom of the cooling water tank (1) is a pipe acting as a drain. This pipe is connected to the outlet valve of the cooling water tank (12).

The thermal tank cup (2) is attached to the thermal tank (10) with screws, by means of the flange cover of the thermal tank (3) and the flange of the thermal tank (4), which causes the thermal tank (10) be hermetic.

The heat exchanger of air of the thermal tank (14) is located in the center of the cover of the thermal tank cup (2), so that when the condensation of water vapor occurs, the water produced precipitates in the desalted water tank (16). The heat exchanger of air of the thermal tank (14) is thermally connected to the cooling water heat exchanger (13).

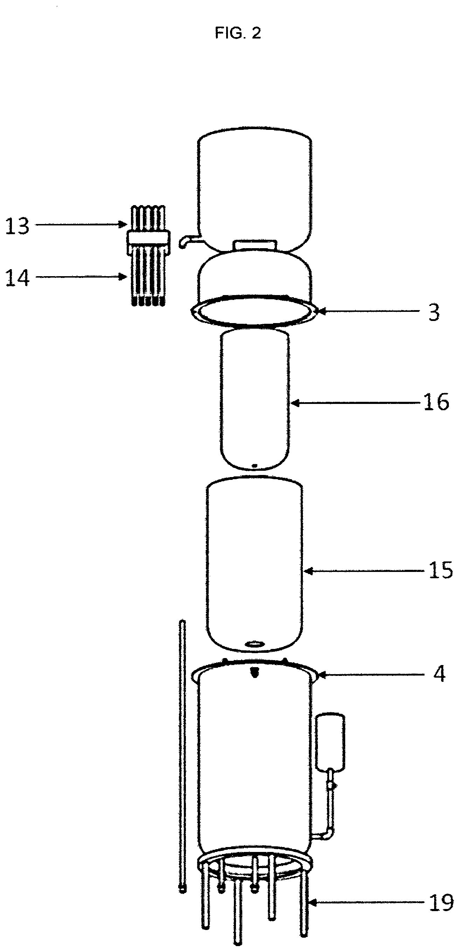

The cooling water heat exchanger (13) is located in the center of the base of the cooling water tank (1) and can be cooled by water or air depending on the shape and size of the cooling water heat exchanger (13). An example of the cooling water heat exchanger (13) is shown in Figure 2, so that it can be water cooled.

The cooling water tank (1) can be filled with refrigerant or water from its upper part. The emptying of the cooling water tank (1) can be performed by opening the outlet valve of the cooling water tank (12).

The thermal desalter device is secured by the thermal tank support (19), which holds it upright and allows the collection and expulsion of liquids from the thermal desalter device. The whole thermal desalter device can be taken apart for the removal of the brines produced by the process.

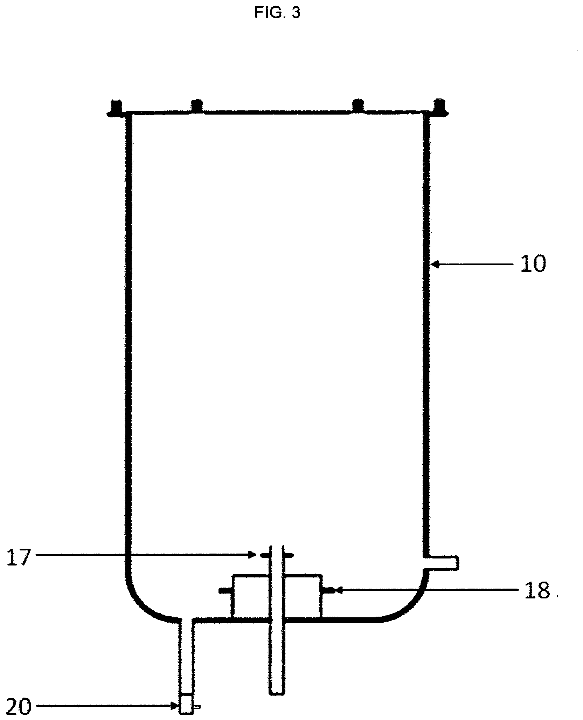

In order to avoid overpressures, the thermal desalter device carries an overpressure valve (20) in any of the outlet pipes of the thermal tank (10) and is placed between the thermal tank (10) and any other valve. In Figure 3, the overpressure valve (20) is positioned before the outlet valve of the thermal tank (11).

The thermal desalter device operates in the following manner. The inlet water valve (7) and the vacuum valve (5) are opened. The outlet valve of the thermal tank (11) and the desalinated water valve (9) are closed. The inlet water tank (6) is filled with water to desalinate until the thermal tank (10) is filled to a level equal to that of the inlet water tank (6). Once the thermal tank (10) is filled with salt water, the inlet water valve (7) is closed, and the pressure in the thermal tank (10) is lowered by means of the vacuum valve (5) with a manual or electric vacuum pump. Once the pressure drop in the thermal tank (10) is achieved, the vacuum valve (5) is closed.

The cooling water tank (1) is filled with water, the outlet valve of the cooling water tank (12) is left ajar, and the cooling water tank (1) is filled as its content is emptied. The last is done in order to maintain a lower temperature in the cooling water heat exchanger (13) than the thermal tank (10). It is verified that all the valves of the thermal desalter device are in the closed position, except the outlet valve of the cooling water tank (12), which is ajar. In this way, the sealing of the thermal desalter device is achieved.

If the thermal desalter device is exposed to sunlight, the thermal tank (10) will be heated until the water contained is boiled and converted to water vapor. This water vapor inside the thermal tank (10) is exposed to the heat exchanger of air of the thermal tank (14), which upon being cooled by contact with the cooling water heat exchanger (13) will condense the water vapor in the form of water drops, which will precipitate on the desalinated water tank (16).

The desalting process will continue until the supplied brackish water reaches a predetermined level in the inlet water pipe (8), in order to avoid accumulation of salts in the inner walls of the thermal tank (10), by desalting in excess the water introduced into the thermal tank (10).

After the desalination process is completed, the vacuum valve (5) is opened, the thermal tank (10) is subjected to atmospheric pressure, the thermal tank (10) of the remaining salt water is emptied, opening the outlet valve of the thermal tank (11), and the desalinated water is collected by opening the desalinated water valve (9). At this point, the entire desalination process can be repeated.

## Claims

1. A thermal desalter device for desalting brackish water by evaporation and condensation, comprising:
- a thermal tank (10), having in its upper part a thermal tank cup (2), both being connected by a flange of the thermal tank (4) and a flange cover of the thermal tank (3);
- four pipes ending in four valves connecting the inside of the thermal tank (10) with the outside. These valves are: a vacuum valve (5), an inlet water valve (7), connected to a inlet water tank (6), which fills the thermal tank (10) of water to be desalted, and an inlet water pipe (8), a desalted water valve (9), and a thermal tank outlet valve (11);
- an insulation tank (15), located inside the thermal tank (10), in the space between the two tanks the brackish water to be desalted is housed;
- A desalted water tank (16), located inside the insulation tank (15), which receives desalinated water;
- an insulation tank support (18) connecting the insulation tank (15) to the thermal tank (10);
- A desalted water tank support (17) connecting the desalted water tank (16) to the thermal tank (10);
- a cooling water heat exchanger (13), located inside a cooling water tank (1), which is open at its top for filling, and at its bottom is a drain pipe, which is connected tb the outlet valve of the cooling water tank (12);
- A heat exchanger of air of the thermal tank (14), located inside the thermal tank cap (10), and is thermally connected to the cooling water heat exchanger (13); and
- a thermal tank support (19), which holds the thermal desalination device upright.

2. Device according to claim 1, wherein the inlet water pipe (8) is made of transparent material.

3. Device according to any one of the preceding claims, wherein the maximum level of filling water of the inlet water tank (6) is lower than the level of the insulation tank (15).

4. Device according to any one of the preceding claims, wherein the vacuum valve (5) is located at a point where the level of brackish or desalinated water does not reach.

5. Device according to any one of the preceding claims, further comprising an overpressure valve (20) located in any of the outlet pipes of the thermal tank (10), and positioned between the thermal tank (10) and any other valve.

6. A method for desalting brackish water by evaporation and condensation by the device according to any one of the preceding claims, comprising the steps of:
a) open the inlet water valve (7) and the vacuum valve (5), close the thermal tank outlet valve (11) and the desalinated water valve (9), fill the inlet water tank (6) with water to desalinate until filling the thermal tank (10), close the inlet water valve (7), lower the pressure of the thermal tank (10) by means of the vacuum valve (5) and close the vacuum valve (5);
b) filling the cooling water tank (1) with water, letting the outlet valve of the cooling water tank (12) half-open, and filling the cooling water tank (1) as its content is being emptied;
c) exposing the thermal desalter device to sunlight, whereby the thermal tank (10) is heated until the water which it contains boils and is converted into water vapor, which, inside the thermal tank (10), comes into contact with the heat exchanger of air of the thermal tank (14), which, upon being cooled by contact with the cooling water heat exchanger (13), condenses the water vapor into droplets which precipitate on the desalted water tank (16);
d) continuing the desalting process until the supplied brackish water reaches the predetermined level in the inlet water pipe (8); and
e) opening the vacuum valve (5) after the desalination process is completed, subjecting the thermal tank (10) to atmospheric pressure, emptying the thermal tank (10) of the remaining salt water, opening the thermal tank outlet valve (11), and collect the desalinated water, opening the desalted water valve (9).
